# EUROPEAN PATENT APPLICATION

(11) **EP 4 506 233 A1**
(43) Date of publication of application: **12.02.2025**
(21) Application number: 22934785.1
(22) Date of filing: 31.10.2022
(51) Int. Cl.: B62D 21/14, B62D 21/02, B60K 1/04

(54) **TELESCOPIC BEAM, TELESCOPIC CHASSIS, AND VEHICLE**

(30) Priority: 01.04.2022 CN 202210340072
(71) Applicant: Voyah Automobile Technology Company Ltd., Hanyang District Wuhan City, Hubei 430050 (CN)
(72) Inventor: LI, Jian, Wuhan, Hubei 430050 (CN); MA, Bibo, Wuhan, Hubei 430050 (CN); DUN, Dongliang, Wuhan, Hubei 430050 (CN); JIANG, Xinwei, Wuhan, Hubei 430050 (CN); HUANG, Bo, Wuhan, Hubei 430050 (CN); LIU, Te, Wuhan, Hubei 430050 (CN); XU, Qi, Wuhan, Hubei 430050 (CN); KE, Shunde, Wuhan, Hubei 430050 (CN)
(74) Representative: Valet Patent Services Limited
(86) International application number: PCT/CN2022/128812
(87) International publication number: WO 2023/184967

(57) **Abstract**

A telescopic beam, a telescopic chassis and a vehicle is disclosed by the invention, which solve a technical problem that beams used on a chassis in the related art is a fixed beam and cannot meet needs of variable vehicle models. The telescopic beam (10) is formed by connecting a first beam section (11) and a second beam section (12). The first beam section (11) has a plurality of first connection portions (11a) of different lengths whose axes are parallel to one another, and the second beam section (12) has a plurality of second connection portions (12a) of different lengths whose axes are parallel to one another. The first connection portions (11a) and the second connection portions (12a) are the same in number and have one-to-one corresponding positions to form a complete beam structure. The telescopic beam (10) provided by the invention can obtain different lengths through different connection schemes of the first connection portion (11a) and the second connection portion (12a), thereby realizing a length adjustment function of the beam and meeting requirements of various vehicle models.

## Description

### CROSS-REFERENCE TO RELATED APPLICATIONS

This application claims the priority to Chinese patent application No. 202210340072.5, filed on April 01, 2022, and entitled "Telescopic beam, telescopic chassis and vehicle" the entire content of which is incorporated herein by reference.

### TECHNICAL FIELD

The invention relates to the technical field of vehicles, and particularly to a telescopic beam, a telescopic chassis and a vehicle.

### BACKGROUND

With the progress of industrial development, the speed of automobile development iteration has accelerated, and the requirements for modular design of automobiles have become increasingly higher. The requirements for coverage of modular design have also been increasing year by year. At present, the beams used on a vehicle chassis are generally fixed beams, which cannot meet the needs of variable vehicle models.

### SUMMARY

The invention provides a telescopic beam, a telescopic chassis and a vehicle. The telescopic beam adopts a two-section structure, a length of which can be telescoped and a strength of which is high.

According to a first aspect of the invention, a telescopic beam is provided, including: a first beam section, provided with two or more first connection portions of different lengths whose axes are parallel to one another, and a second beam section, provided with two or more second connection portions of different lengths whose axes are parallel to one another; and the first connection portions and the second connection portions are the same in number and disposed at positions which are in one-to-one correspondence with one another; and at least one first connection portion and at least one second connection portion which are located on different axes overlap and are fixedly connected in an axial direction.

According to a second aspect of the invention, a telescopic chassis is provided, including at least one telescopic beam according to the first aspect.

According to a third aspect of the invention, a vehicle is provided, including the telescopic chassis of the second aspect; or, at least one telescopic beam of the first aspect.

### BRIEF DESCRIPTION OF DRAWINGS

FIG. 1 shows a schematic structural diagram of a telescopic beam according to one or more embodiments of the invention.
FIG. 2 shows an exploded view of a telescopic beam according to one or more embodiments of the invention.
FIG. 3 shows a schematic structural diagram of a first beam section in the telescopic beam of FIG. 1.
FIG. 4 shows a first length change state diagram of a telescopic beam according to one or more embodiments of the invention.
FIG. 5 shows a second length change state diagram of a telescopic beam according to one or more embodiments of the invention.
FIG. 6 shows a schematic structural diagram of a telescopic chassis according to one or more embodiments of the invention.
FIG. 7 shows a schematic structural diagram of a chassis framework in the telescopic chassis of FIG. 6.
FIG. 8 shows a schematic structural diagram of a telescopic chassis according other embodiments of the invention.
FIG. 9 shows an assembly structural diagram of a power source and the chassis framework in the telescopic chassis of FIG. 8.

Illustration of reference numerals:
10, telescopic beam; 11, first beam section; 11a, first connection portion; 12, second beam section; 12a, second connection portion; 13, fix position; *a*, gap.
1000, chassis platform; 100, chassis framework ; 101, front section; 102, middle section; 103, rear section; 104, installation cavity; 110, longitudinal beam; 111, front longitudinal-beam section; 112, front transition section; 113, middle longitudinal-beam section; 114, rear transition section; 115, rear longitudinal-beam section; 120, frame beam assembly; 121, frame longitudinal-beam; 122, frame cross-beam; 130, elastic buffer mechanism; 140, combined beam; 141, cross beam; 142, wire channel; 150, buffer beam; 151, buffer space; 200, power source; 300, high voltage connection device; 400, controller; 500, cover plate; 510, convex rib; 511, connection position.

### DESCRIPTION OF EMBODIMENTS

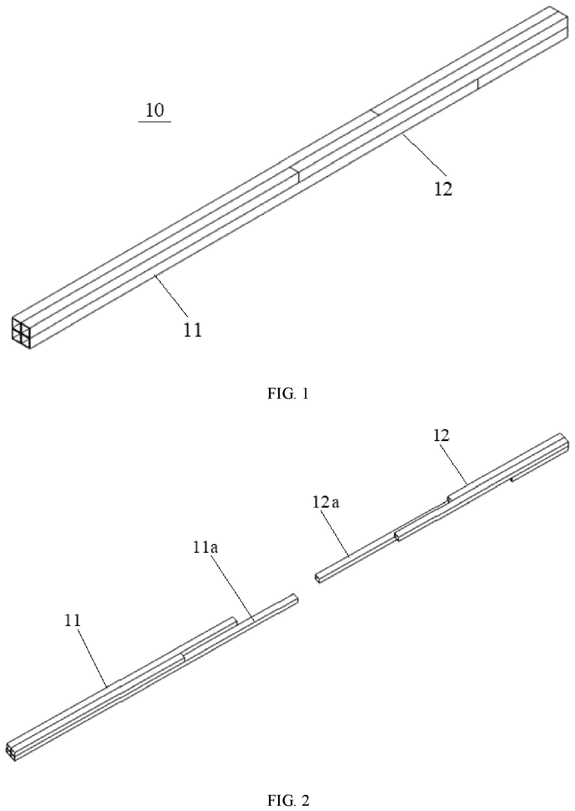

In a first aspect of the invention, a telescopic beam is provided. Referring to FIG. 1 and FIG. 2, the telescopic beam 10 adopts a split structure, and is formed by connecting a first beam section 11 and a second beam section 12. The first beam section 11 has a plurality of first connection portions 11a of different lengths whose axes are parallel to one another, and the second beam section 12 correspondingly has a plurality of second connection portions 12a of different lengths whose axes are parallel to one another. The first connection portions 11a and the second connection portions 12a are the same in number and are disposed at positions which are in one-to-one correspondence with one another, that is, as for each first connection portion 11a, there is a second connection portion 12a which is coaxial to the each first connection portion 11a, thereby ensuring that boundary conditions of various portions of spliced telescopic beam 10 are basically consistent, forming a complete beam structure. At least one first connection portion 11a and at least one second connection portion 12a in the telescopic beam 10 are fixedly connected, and the connected first connection portion 11a and second connection portion 12a are not coaxial. The first beam section 11 and the second beam section 12 are connected by fixedly connecting the first connection portion 11a to the second connection portion 12a, thereby ensuring that the telescopic beam 10 has a certain strength.

The first connection portion 11a and the second connection portion 12a overlapping in an axial direction are regarded as a group of connection beam pair, and thus the telescopic beam 10 should have at least one group of connection beam pair. In some embodiments, in order to enhance a structural strength of the telescopic beam 10, there should be at least two groups of connection beam pairs in the telescopic beam 10. Since the first connection portion 11a and the second connection portion 12a in one group of connection beam pair are not coaxial, the two first connection portions 11a and the two second connection portions 12a in the two groups of connection beam pairs are distributed on at least three different axes, so that the telescopic beam 10 has stable rigid connections on at least three axes which are parallel to one another, thereby ensuring the structural strength of the telescopic beam 10.

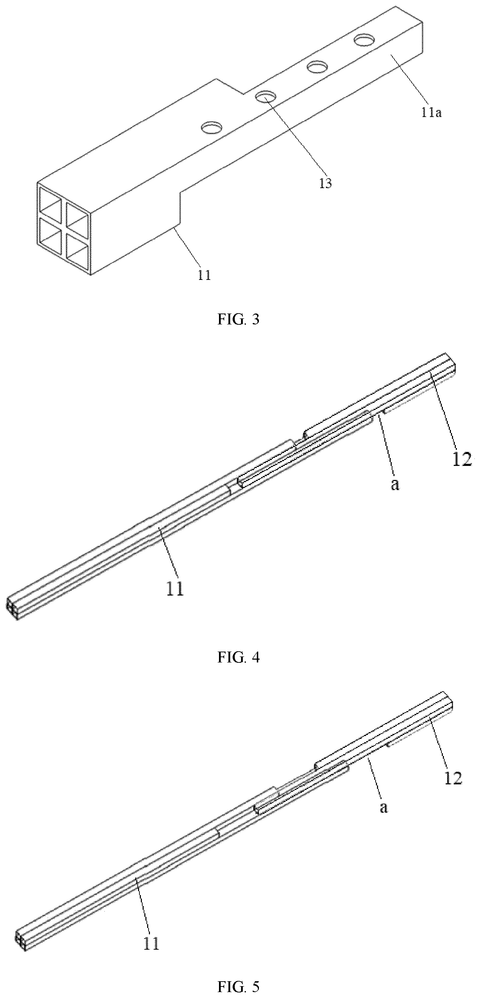

Referring to FIGs. 1 to 3, in one or more embodiments, the first beam section 11 has four first connection portions 11a with different lengths whose axes are parallel to one another, and the second beam section 12 correspondingly has four second connection portions 12a with different lengths whose axes are parallel to one another. The four first connection portions 11a are distributed in a form of 2×2 matrix, and the four second connection portions 12a are also distributed in a form of a 2×2 matrix. Thus, the telescopic beam 10 has following four length change modes: one group of connection beam pairs; two groups of connection beam pairs; three groups of connection beam pairs; and four groups of connection beam pairs. FIGs. 4 and 5 show structural diagrams of the telescopic beam having different lengths, and in a state of four groups of connection beam pairs, there is a certain gap *a* between four first connection portions 11a and four second connection portions 12a which are coaxial to the four first connection portions 11a, respectively. In a state of four groups of connection beam pairs, as shown in FIG. 1, the four first connection portions 11a, and the four second connection portions 12a which are coaxial to the four first connection portions 11a respectively, are tightly fitted. Certainly, in other embodiments, the number of the first connection portions 11a and the second connection portions 12a may also be 3, 5, 6 and the like.

Lengths of the first connection portions 11a in the first beam section 11 are different from one another, and lengths of the second connection portions 12a in the second beam section 12 are also different from one another. When the first connection portions 11a in the first beam section 11 are sorted in descending order according to length, and the second connection portions 12a in the second beam section 12 are sorted in descending order according to length, an i^{th} first connection portion 11a sorted in length is coaxial with a j^{th} second connection portion 12a sorted in length, where 1≤i≤n, 1≤j≤n, i+j=n+1, and n= the number of first connection portions 11a/ the number of second connection portions 12a. That is to say, a coaxial solution, in which the first connection portion 11a and the second connection portion 12a are coaxial, is "long-short matching". With this coaxial solution, it can be ensured that the telescopic beam 10 can have a variety of length change solutions and have a relatively high structural strength.

A sum of lengths of the first connection portion 11a and the second connection portion 12a which are coaxial is recorded as a shaft body length. When the first connection portions 11a in the first beam section 11 are sorted in descending order according to length, and the second connection portions 12a in the second beam section 12 are sorted in descending order according to length, a sum of a length of an i^{th} first connection portion 11a sorted in sequence by length and a length of a j^{th} second connection portion 12a sorted in sequence by length is a shaft body length Li. In one or more embodiments, the shaft body lengths Li located on different axes are the same. That is to say, in the telescopic beam 10, an end of each first connection portion 11a is in one-to-one correspondence to an end of each second connection portion 12a, and ends of first connection portion 11a and ends of second connection portion 12a which are in one-to-one correspondence with one another respectively are all abutted to one another or all separated from one another. When the ends of first connection portion 11a and the ends of second connection portion 12a, which are in one-to-one correspondence with one another, are all separated from one another, gaps *a* between ends of the first connection portion 11a and the second connection portion 12a, which are coaxial, are equal, and the telescopic beam 10 of different lengths can be obtained by adjusting the gap *a* of the ends.

Since lengths of the first connection portions 11a in the first beam section 11 are different from one another, and lengths of the second connection portions 12a in the second beam section 12 are also different from one another, axial positions of gaps *a* between the ends of different first connection portions 11a and second connection portions 12a are also different. The first connection portions 11a and the second connection portions 12a being distributed in a form of 2×2 matrix is taken as an example, when a gap *a* appears between the first connection portion 11a and the second connection portion 12a which are on an axis, at axial positions of the other three axes which correspond to an axial position of this gap *a*, it is solid structures of the first connection portion 11a and the second connection portion 12a, that is there are no gaps between the first connection portions 11a/the second connection portions 12a at axial positions of the other three axes which correspond to an axial position of this gap *a*, as shown in FIGs. 4 and 5, thereby ensuring that at least two solid structures overlap at each position where a gap *a* appears along an axial direction to ensure a strength, and a weight of the telescopic beam 10 is lower compared with a complete solid beam.

In one or more embodiments, the first connection portions 11a and the second connection portions 12a have same cross-sectional shapes and cross-sectional areas, so that boundary conditions of various portions of spliced telescopic beam 10 are completely the same. In some embodiments, if the first connection portions 11a and the second connection portions 12a are all rectangular beams, then the telescopic beam 10 obtained by connecting the first connection portions 11a and the second connection portions 12a which are distributed in a form of 2×3 matrix is also a rectangular beam. In another embodiment, the first connection portions 11a and the second connection portions 12a are all triangular beams, then the telescopic beam 10 obtained by connecting the first connection portions 11a and the second connection portions 12a, cross-sectional shapes of which are triangular shape, is a triangular beam. In other embodiments, the first connection portions 11a and the second connection portions 12a are hexagonal beams, then the telescopic beam 10 obtained by connecting the first connection portions 11a and the second connection portions 12a, cross-sectional shapes of which are hexagonal shape, is a hexagonal beam. Other configurations of cross-sectional shapes are not exhaustive here.

In one or more embodiments, the first beam section 11 may adopt an integral structure. In some embodiments, the first beam section 11, which has a plurality of first connection portions 11a of different lengths whose axes are parallel to one another, is directly obtained by casting. The first beam section 11 may also adopt a split structure, in some embodiments, the first beam section 11 is obtained by fixedly connecting two or more first butt beams of different lengths whose axes are parallel to one another, and a plurality of first butt beams may be fixedly connected as one by welding, binding, bonding, screw connection, or the like.

In one or more embodiments, the second beam section 12 may adopt an integral structure. In some embodiments, the second beam section 12, which has a plurality of second connection portions 12a of different lengths whose axes are parallel to one another, is directly obtained by casting. The second beam section 12 may also adopt a split structure, in some embodiments, the second beam section 12 is obtained by fixedly connecting two or more second butt beams of different lengths whose axes are parallel to one another, and a plurality of second butt beams may be fixedly connected as one by welding, binding, bonding, screw connection, or the like.

In order to reduce the weight of the telescopic beam 10, the first connection portion 11a and the second connection portion 12 a may be configured as hollow structures, as shown in FIG. 3. In one or more embodiments, a first connection portion 11a and/or a second connection portion 12a are/is a hollow structure; in other one or more embodiments, two first connection portions 11a/second connection portions 12a are hollow structures; in yet one or more embodiments, all first connection portions 11a/second connection portions 12a are hollow structures. The specific configuration of distribution of the hollow structures is not limited in this invention.

The first connection portion 11a and the second connection portion 12a that overlap and are fixedly connected in the axial direction may be fixedly connected by a threaded fastener or a binding band, or alternatively the first connection portion 11a and the second connection portion 12a may be fixedly connected by welding or bonding. When a threaded fastener or a binding belt is used, the first connection portion 11a and the second connection portion 12a are all provided with one or more fix positions 13 thereon for installing the threaded fastener or the binding belt in the axial direction.

Referring to FIG. 3, in one or more embodiments, the first connection portion 11a and the second connection portion 12a that overlap and are fixedly connected in the axial direction are connected by the threaded fasteners, and through holes are disposed on the first connection portion 11a and the second connection portion 12a. The through holes serve as fix positions 13. The numbers of through holes on the first connection portion 11a / the second connection portion 12a are determined according to axial lengths of the first connection portion 11a / the second connection portion 12a. To facilitate connection and fixation, when a plurality of through holes are disposed on the first connection portion 11a/the second connection portion 12a, axial hole distances between two adjacent through holes on a same first connection portion 11a/second connection portion 12a are the same, and axial hole distances between two adjacent through holes on a different first connection portion 11a/second connection portion 12a are the same or in an integer multiple relationship, so as to facilitate an alignment of the through holes.

The telescopic beam provided according to one or more embodiments of the invention has the following advantages:
1) The telescopic beam provided by the invention realizes a length adjustment function of the beam by providing a plurality of first connection portions/second connection portions whose axes are parallel to one another. Different lengths can be obtained through different connection schemes of the first connection portions and the second connection portions.
2) As for a telescopic beam according to embodiments of the invention, a total weight of the telescopic beam is, by configuring a plurality of first connection portions/second connection portions whose axes are parallel to one another, reduced while a strength of the telescopic beam is ensured. In addition, the telescopic beam has same boundary conditions at all locations along the axial direction, and thus has low space requirements for invention scenarios.

In a second aspect of the invention, a telescopic chassis 1000 is provided. At least one beam in the telescopic chassis 1000 adopts the telescopic beam 10 according to the first aspect. Since the length of the telescopic beam 10 is adjustable, needs of various vehicle models can be met. Since the boundary conditions of the telescopic beam 10 of the first aspect are the same as those of conventional fixed beam, other structures of the telescopic chassis 1000 do not need to be adjusted when it is applied to chassis improvement of mass-produced vehicles. Therefore, other structures of the telescopic chassis 1000 disclosed in the invention can refer to the relevant disclosures of the related art and will not be described in detail here.

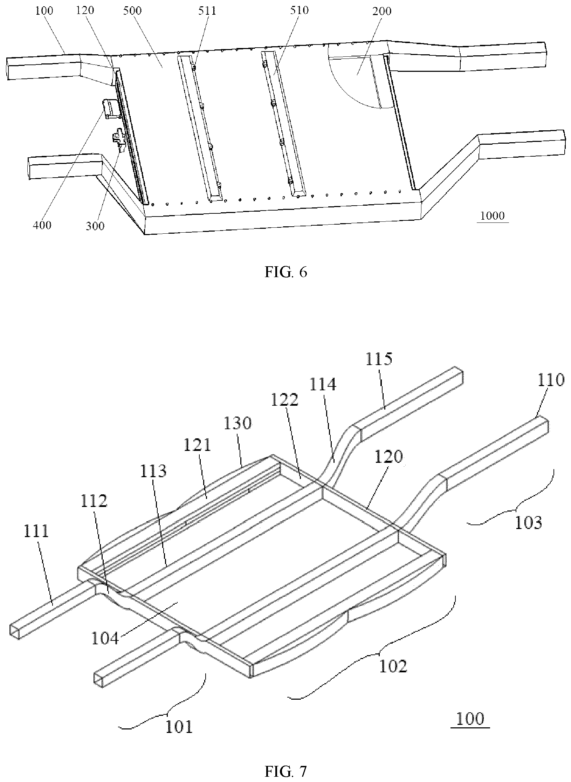

Referring to FIG. 6, in one or more embodiments, the telescopic chassis 1000 is an integrated chassis, and the telescopic chassis 1000 includes a chassis framework 100 and a power source 200. At least one beam in the chassis framework 100 adopts the telescopic beam 10 of the first aspect to achieve lateral and/or longitudinal telescoping. The power source 200 is disposed in the installation cavity 104 of the chassis framework 100. The power source 200 may be a battery module, a fuel cell or other device. In one or more embodiments, the power source 200 is a power battery. The power battery may be a group of cells with uniform specifications stacked together, or the power battery may contain cells of different specifications.

**In** order to further improve an integration of the telescopic chassis 1000, in one or more embodiments, the telescopic chassis 1000 further includes a high voltage connection device 300 and a controller 400. The high voltage connection device 300 and the controller 400 are both disposed on the chassis framework 100. The controller 400 may be packaged in the installation cavity 104 or installed outside the chassis framework 100. The high voltage connection device 300 serves as a connection port and is usually disposed outside the chassis framework 100.

The high voltage connection device 300 and the controller 400 are both electrically connected to the power source 200. The controller 400 is configured to receive driving signals, and control a power (electricity) output of the power source 200, as well as a charging process when the power source 200 is configured as the power battery. The high voltage connection device 300 may be any device on a vehicle for achieving high voltage electrical conduction, such as a high voltage connector, an on-board charger, a DCDC (voltage converter) and so on. In some embodiments, when there is a front drive motor, the high voltage connector is disposed at a front end of a middle section 102, and a high voltage line is led out from the high voltage connector and connected to the front drive motor. When a charge port is disposed at a front end of a vehicle, the on-board charger may be disposed at the front end of the middle section 102 to reduce a length of the high voltage line. In some embodiments, when there is a rear-placement requirement for a drive motor, the high voltage line may also be led out from a rear end of the middle section 102, thereby reducing the length of the high voltage line.

In some embodiments, a cover plate 500 is disposed on the telescopic chassis 1000. The cover plate 500 covers on the chassis framework 100 and may be fixedly connected to a frame beam assembly 120 and/or a longitudinal beam 110. On one hand, the cover plate 500 can protect the power source 200 from water, dust and insect bites; on the other hand, the cover plate 500 can support a structure of a vehicle passenger compartment, or fix a wiring harness, an air conditioning duct and so on. The cover plate 500 may be formed by an integrated die-casting process, which is not limited here.

Referring to FIG. 6, in one or more embodiments, a convex rib 510 is disposed on an upper surface of the cover plate 500 away from the power source 200, and a plurality of connection positions 511 are disposed on the convex rib 510. On the one hand, the convex rib 510 acts as a reinforcing rib to increase a strength of the cover plate 500; on the other hand, the convex rib 510 protrudes from the upper surface of the cover plate 500, so when the threaded fastener is connected to the connection position 511, the threaded fastener will not damage a structure of the cover plate 500. In some embodiments, there is no need to drill a hole in the cover plate 500 to connect the cover plate 500 to a seat, thereby ensuring a sealing between the installation cavity and outside.

Referring to FIGs. 6 and 7, in one or more embodiments, the chassis framework 100 includes a frame beam assembly 120 and at least one longitudinal beam 110. The frame beam assembly 120 is configured as a closed frame structure, and an installation cavity 104 for installing a power source is disposed inside the frame beam assembly 120. The power source may be a device such as a battery module, a fuel cell and so on. The power source can be integrated inside the chassis framework 100 by providing the installation cavity 104, thereby improving an integration of the telescopic chassis 1000.

The longitudinal beam 110 is a beam extending in a longitudinal direction (which is a direction from a front to a rear of the vehicle, also called a length direction of the vehicle) of the vehicle. When there are two or more longitudinal beams 110, the two or more longitudinal beams 110 are spaced apart and distributed in parallel in a transverse direction (a direction from a driver side to a co-driver side, also called a width direction of the vehicle) of the vehicle. In some embodiments, in order to improve the strength, a reinforcing cross beam may also be disposed between two adjacent longitudinal beams 110. Various longitudinal beams 110 extend through the frame beam assembly 120 along the longitudinal direction of the vehicle, and two ends of various longitudinal beams 110 extend out of the frame beam assembly 120 to connect a vehicle body frame at front and rear of the vehicle. A frame of the chassis framework 100 is constructed by a frame beam assembly 120 and longitudinal beams 110. A longitudinal structural strength of the chassis framework 100 is ensured by at least one longitudinal beam 110 disposed along the longitudinal direction of the vehicle. The frame beam assembly 120 serves as a portion of the chassis framework 100 to ensure a transverse structural strength of the chassis framework 100 and to assist in improving the longitudinal structural strength of the chassis framework 100.

Referring to FIGs. 6 and 7, in one or more embodiments, the chassis framework 100 is in a form of three sections, which are a front section 101, a middle section 102 and a rear section 103 along the longitudinal direction of the vehicle. The frame beam assembly 120 and an elastic buffer mechanism 130 are both located at the middle section 102, and heights of the front section 101 and the rear section 103 are not lower than a height of the middle section 102, that is, a middle portion of the chassis framework 100 is concave, and a concave middle portion of the chassis framework 100 can provide an installation space for the power source, and correspondingly the front section 101 and rear section 103, which are higher than the concave middle portion, provide an installation space for front and rear wheels of the vehicle. For power sources of different dimensions, the chassis frameworks 100 with different concave depths may be selected.

Based on a three-section structure of the chassis framework 100, the longitudinal beam 110 is also configured as a structure with a concave middle portion. Referring to FIG. 7, in one or more embodiments, the longitudinal beam 110 includes a front longitudinal-beam section 111, a front transition section 112, a middle longitudinal-beam section 113, a rear transition section 114 and a rear longitudinal-beam section 115 which are sequentially connected along the longitudinal direction of the vehicle. Heights of the front longitudinal-beam section 111 and the rear longitudinal-beam section 115 are not lower than a height of the middle longitudinal-beam section 113. The front transition section 112 and the rear transition section 114 serve as transition sections for height difference. In order to reduce stress, two ends of the front transition section 112 are of arc shape for respectively connecting to the front longitudinal-beam section 111 and the middle longitudinal-beam section 113. Two ends of the rear transition section 114 are of arc shape for respectively connecting to the rear longitudinal-beam section 115 and the middle longitudinal-beam section 113. The middle longitudinal-beam section 113 is connected to the frame beam assembly 120 and is located in the installation cavity 104. A concave depth of the chassis framework 100 is determined by the front transition section 112 and the rear transition section 114 of the longitudinal beam 110. When heights of the front transition section 112 and the rear transition section 114 are higher, the concave depth of the chassis framework 100 is greater.

The frame beam assembly 120 can adopt a frame structure such as a rectangular frame, a cross-shaped frame, a grip-shaped, a hexagonal frame and so on, and a specific structure of the frame beam assembly 120 is not limited in the invention. Referring to FIG. 7, in one or more embodiments, the frame beam assembly 120 includes at least two frame longitudinal-beams 121 disposed opposite to one another and at least two frame cross-beams 122 disposed opposite to one another. The two frame longitudinal-beams 121 located at outside and the two frame cross-beams 122 located at outside are connected to form a rectangular frame.

In one or more embodiments, the frame beam assembly 120 is a rectangular frame composed of two frame longitudinal-beams 121 and two frame cross-beams 122. The longitudinal beam 110 passes through the frame beam assembly 120. In some embodiments, the two longitudinal beams 110, which are disposed at positions that divide the frame cross-beam 122 into three equal portions, pass through the frame beam assembly 120. The frame cross-beam 122 ensures the transverse structural strength of the chassis framework 100. The longitudinal beam 110 and the frame longitudinal-beam 121 ensure the longitudinal structural strength of the chassis framework 100. The frame cross-beam 122 and the frame longitudinal-beam 121 can be connected by threaded fasteners, welding, riveting and so on. The frame cross-beam 122 and the longitudinal beam 110 may also be connected by threaded fasteners, welding and so on.

Referring to FIG. 7, in some embodiments, the chassis framework 100 also includes an elastic buffer mechanism 130, which is disposed at at least one side of the frame beam assembly 120 in a transverse direction of the vehicle, that is, the elastic buffer mechanism 130 may be disposed at a left side or a right side of the frame beam assembly 120, or the elastic buffer mechanisms 130 are disposed at both the left side and the right side of the frame beam assembly 120. The elastic buffer mechanism 130 is elastic and can absorb a collision energy in the transverse direction and deform, so that an impact of side collision on the power source can be reduced, thereby assisting in improving the transverse structural strength of the chassis framework 100.

An elastic shock absorbing mechanism used in the vehicle in the related art may be used as the elastic buffer mechanism 130 of the invention, such as leaf springs, springs, disc springs, rubber and elastic collision blocks and so on. In one or more embodiments, the elastic buffer mechanism 130 may be a leaf spring, and a material of the leaf spring is a steel plate or glass fiber. In other embodiments, a material of the leaf spring may includes a steel plate and a glass fiber.

In a third aspect of the invention, another telescopic chassis 1000 is provided. At least one beam in the telescopic chassis 1000 adopts the telescopic beam 10 of the first aspect. Since the length of the telescopic beam 10 is adjustable, needs of various vehicle models can be met. Since the boundary conditions of the telescopic beam 10 of the first aspect are the same as those of conventional fixed beam, other structures of the telescopic chassis 1000 do not need to be adjusted when it is applied to chassis improvement of mass-produced vehicles. Therefore, other structures of the telescopic chassis 1000 disclosed in the invention can refer to the relevant disclosures of the related art and will not be described in detail here.

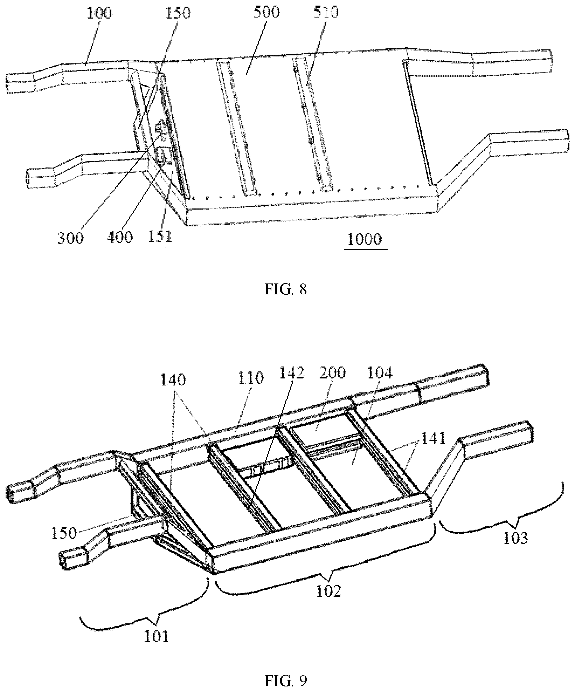

Referring to FIG. 8, in one or more embodiments, the telescopic chassis 1000 is an integrated chassis, and the telescopic chassis 1000 includes a chassis framework 100 and a power source 200. At least one beam in the chassis framework 100 adopts the telescopic beam 10 of the first aspect to achieve lateral and/or longitudinal telescoping. The power source 200 is disposed in the installation cavity 104 of the chassis framework 100. The power source 200 may be a battery module, a fuel cell or other device. In one or more embodiments, the power source 200 is a power battery. The power battery may be a group of cells with uniform specifications stacked together, or the power battery may contain cells of different specifications.

Referring to FIG. 9, in one or more embodiments, the chassis framework 100 includes two longitudinal beams 110 which are disposed opposite to and in parallel with one another and at least two groups of combined beams 140. A plurality of installation positions are disposed at the two longitudinal beams 110 at an interval along an axial direction. The combined beams 140 are disposed in the transverse direction and vertically connected between the two longitudinal beams 110. The combined beams 140 are installed at various installation positions in one-to-one correspondence. The combined beams 140 and the longitudinal beams 110 together enclose a plurality of installation cavities 104 for arranging power sources.

Referring to FIG. 9, in one or more embodiments, the combined beam 140 includes at least two cross beams 141 that are parallel to one another and spaced apart, and a gap between two adjacent cross beams 141 in a same group of combined beams 140 constitutes a wire channel 142 for pipelines to pass through. In some embodiments, each installation position of the longitudinal beam 110 includes a plurality of installation points disposed at an interval in a vertical direction, and the number of installation points of each installation position is not less than the number of cross beams 141 of a corresponding combined beam 140. The cross beams 141 in each group of combined beams 140 may be selectively connected to any installation point of a corresponding installation position, so that a height of the cross beams 141 of each group of combined beams 140 can be adjusted to accommodate the power sources 200 of different heights, thereby improving space utilization.

Referring to FIGs. 8 and 9, in some embodiments, the chassis framework 100 further includes a buffer beam 150, which is connected to a bottom of the two longitudinal beams 110. An installation height of the buffer beam 150 should be lower than an installation height of the cross beam 141 which is located at an upper portion in each group of combined beams 140. In the longitudinal direction of the vehicle, the buffer beam 150 is located outside an outermost combined beam 140. In some embodiments, the buffer beam 150 is located at a front side of the combined beam 140 which is close to a head of the vehicle. The buffer beam 150 and the outermost combined beam 140 together enclose a buffer space 151. Referring to FIG. 5, in some embodiments, the buffer beam 150 is a bent beam. The buffer beam 150 can play a certain buffering and energy-absorbing role when a collision occurs by configuring the buffer beam 150 as the bent beam.

In some embodiments, the telescopic chassis 1000 also includes a high voltage connection device 300 and a controller 400. When the high voltage connection device 300 and the controller 400 are external, installation positions of the high voltage connection device 300 and the controller 400 may be close to the buffer beam 150, so that projections of the high voltage connection device 300 and the controller 400 is located in the buffer space 151. When a collision occurs, the buffer beam 150 can protect the high voltage connection device 300 and the controller 400. Other structures of the high voltage connection device 300 and the controller 400 which are not described may refer to relevant disclosures of the related art or the relevant contents of the above-mentioned second aspect, and will not be described in detail here.

In a fourth aspect of the invention, a vehicle is provided, including the telescopic chassis of the second aspect or the third aspect; in other embodiments, the vehicle may also be configured to have at least one beam which is the telescopic beam of the first aspect. Since the vehicle provided by the invention does not improve other structures of the vehicle, other structures of the vehicle which are not described can refer to relevant disclosures of the related art and will not be described in detail here.

Although preferred embodiments of the invention have been described, additional modifications and variations may be made to these embodiments by those skilled in the art once the basic inventive concepts are known. Therefore, it is intended that the appended claims be interpreted as including the preferred embodiment as well as all modifications and variations that fall within the scope sought for by the invention.

Obviously, those skilled in the art can make various modifications and variations to the invention without departing from the spirit of and the scope sought for by the invention. Thus, if these modifications and variations of the invention fall within the scope sought for by the claims of the invention and the equivalent technologies thereof, the invention is also intended to include these modifications and variations.

## Claims

1. A telescopic beam, comprising:
a first beam section, provided with two or more first connection portions of different lengths whose axes are parallel to one another, and
a second beam section, provided with two or more second connection portions of different lengths whose axes are parallel to one another;
wherein, the first connection portions and the second connection portions are the same in number and disposed at positions which are in one-to-one correspondence with one another; and at least one first connection portion and at least one second connection portion which are located on different axes overlap and are fixedly connected in an axial direction.

2. The telescopic beam according to claim 1, wherein various first connection portions have different length; and various second connection portions have different length; and
the number of the first connection portions and the number of the second connection portions are both n; an i^{th} first connection portion sorted in sequence by length is coaxial with a j^{th} second connection portion sorted in sequence by length, wherein 1≤i≤n, 1≤j≤n, i+j=n+1.

3. The telescopic beam according to claim 2, wherein shaft body lengths Li located on different axes are the same; the shaft body length Li is a sum of a length of the i^{th} first connection portion sorted in sequence by length and a length of the j^{th} second connection portion sorted in sequence by length.

4. The telescopic beam according to claim 1, wherein the first connection portion and the second connection portion are fixedly connected by a threaded fastener or a binding belt, and are all provided with one or more fix positions thereon for installing the threaded fastener or the binding belt along the axial direction; or
the first connection portion and the second connection portion are fixed by welding or bonding.

5. The telescopic beam according to claim 4, wherein axial intervals between two adjacent fix positions on a same first connection portion/second connection portion are the same; and the axial intervals between two adjacent fix positions on different first connection portions/second connection portions are the same or in an integer multiple relationship.

6. The telescopic beam according to any one of claims 1 to 5, wherein at least one first connection portion is of a hollow structure; at least one second connection portion is of a hollow structure; the first connection portions and the second connection portions have same cross-sectional shapes and cross-sectional areas;
the first beam section is an integrated structure; or, the first beam section is formed by fixedly connecting two or more first butt beams of different lengths whose axes are parallel to one another; and
the second beam section is an integrated structure; or, the second beam section is formed by fixedly connecting two or more second butt beams of different lengths whose axes are parallel to one another.

7. A telescopic chassis, comprising at least one telescopic beam according to any one of claims 1 to 6.

8. The telescopic chassis according to claim 7, comprising:
a chassis framework, comprising a front section, a middle section and a rear section which are connected in sequence along a longitudinal direction of a vehicle; heights of the front section and the rear section are not lower than a height of the middle section, and the middle section is provided with an installation cavity; and
a power source, disposed in the installation cavity;
wherein, at least one cross beam and/or longitudinal beam of the chassis framework is the telescopic beam.

9. The telescopic chassis according to claim 8, further comprising an elastic buffer mechanism and/or a buffer beam, wherein the elastic buffer mechanism e is disposed on at least one side of the middle section in a transverse direction of the vehicle, and the buffer beam is disposed on at least one side of the middle section in the longitudinal direction of the vehicle;
the chassis framework comprises a frame beam assembly and at least one longitudinal beam, wherein the frame beam assembly is located at the middle section; the installation cavity is disposed inside the frame beam assembly; and the at least one longitudinal beam passes through the frame beam assembly in the longitudinal direction of the vehicle, and has two ends protruding from the frame beam assembly; or
the chassis framework comprises two longitudinal beams which are disposed opposite to and in parallel with one another and at least two groups of combined beams, wherein a plurality of installation positions are disposed on the two longitudinal beams at an interval along the axial direction; the at least two groups of combined beams are installed at various installation positions in one-to-one correspondence; and the at least two groups of combined beams and the two longitudinal beams together enclose a plurality of installation cavities.

10. A vehicle, comprising the telescopic chassis according to any one of claims 7 to 9; or comprising at least one telescopic beam according to any one of claims 1 to 6.
